# EUROPEAN PATENT APPLICATION

(11) **EP 4 586 132 A1**
(43) Date of publication of application: **16.07.2025**
(21) Application number: 22961072.0
(22) Date of filing: 28.09.2022
(51) Int. Cl.: G06F 40/30, G06F 40/211, G06F 16/332, G10L 15/26, G10L 15/22, G10L 13/04, G06F 3/16

(54) **ARTIFICIAL INTELLIGENCE DEVICE AND METHOD FOR OPERATING SAME**

(71) Applicant: LG Electronics Inc., Yeongdeungpo-gu Seoul 07336 (KR)
(72) Inventor: LEE, Jaekyung, Seoul 06772 (KR); KIM, Yongtae, Seoul 06772 (KR); LEE, Hyangjin, Seoul 06772 (KR); KWAK, Changmin, Seoul 06772 (KR); MIN, Sunki, Seoul 06772 (KR); KIM, Taejoon, Seoul 06772 (KR); BYEON, Yeongbin, Seoul 06772 (KR)
(74) Representative: Schornack, Oliver
(86) International application number: PCT/KR2022/014593
(87) International publication number: WO 2024/071469

(57) **Abstract**

An artificial intelligence device and an operating method thereof are disclosed. An artificial intelligence device according to at least one embodiment of the present disclosure comprises a display; and a processor configured to control the display, wherein the processor is configured to receive a user input, transmit the user input to a server, receive response information including intent analysis result information for the user input from the server, and perform at least one operation among outputting information and executing a function according to the response information, wherein the intent analysis result information includes an intent result analysis for the user input that has been first processed based on at least one intent analysis factor transmitted to the server.

## Description

### [Technical field]

The present disclosure relates to an artificial intelligence device and its operating method.

### [Background Art]

The competition in voice recognition technology that started with smartphones is expected to fully heat up in homes in conjunction with the full-scale spread of the Internet of Things (IoT).

In particular, it is noteworthy that the device is an artificial intelligence (AI) device that can issue commands and have conversations using voice.

The voice recognition service has a structure that selects the optimal answer to a user's question by utilizing a massive database.

The voice search function also converts input voice data into text on a cloud server, analyzes it, and retransmits real-time search results based on the results to the device.

The cloud server has the computing power to store and process numerous words in real time by dividing them into voice data classified by gender, age, and accent.

As more voice data is accumulated, voice recognition will become more accurate to the level of human parity.

However, in the past, the intention analysis result according to voice recognition often did not match the speaker's intention, which was inconvenient to use.

### [Detailed Description of the Invention]

### [Technical Problem]

The present disclosure aims to solve the above-mentioned problem and other problems.

The present disclosure aims to provide an artificial intelligence device.

The present disclosure derives optimal intention analysis result information that better matches the intention of a speaker using an artificial intelligence device.

The present disclosure provides corresponding information or performs a function based on optimal intention analysis result information for the input of a speaker using a voice recognition service.

### [Technical Solution]

According to at least one embodiment of the various embodiments of the present disclosure, an artificial intelligence device may include a display; and a processor configured to control the display, wherein the processor is configured to receive a user input, transmit the user input to a server, receive response information including intent analysis result information for the user input from the server, and perform at least one operation among outputting information and executing a function according to the response information, wherein the intent analysis result information includes an intent result analysis for the user input that has been first processed based on at least one intent analysis factor transmitted to the server.

According to at least one embodiment of the various embodiments of the present disclosure, the processor may be configured to receive user feedback data according to the at least one operation performed, update the one or more intent analysis factors based on the feedback data, and transmit the updated intent analysis factors to the server.

According to an artificial intelligence device according to at least one embodiment of the various embodiments of the present disclosure, the device may further include a memory configured to communicate with the processor and store data, and wherein the processor may be configured to parse the response information and to read, from the memory, information to be output and information related to executing the function based on the parsed response information.

According to an artificial intelligence device according to at least one embodiment of the various embodiments of the present disclosure, when outputting information according to the intent analysis result information in the response information, the processor may be configured to provide information configured as a first version or a second version based on the one or more intent analysis factors transmitted to the server.

According to an artificial intelligence device according to at least one embodiment of the various embodiments of the present disclosure, when executing the function according to the intent analysis result information in the response information, the processor may be configured to determine whether the function is capable of being executed, and when the determination result indicates that the function is not capable of being executed, provide recommended function information and execute the recommended function instead.

According to an artificial intelligence device according to at least one embodiment of the various embodiments of the present disclosure, when an event occurrence is detected, the processor may be configured to extract a previous user input, the intent analysis result information, and function execution operation information, and output information on at least one of information on the recommended reward function, and execute the recommended reward function.

According to an artificial intelligence device according to at least one embodiment of the various embodiments of the present disclosure, the processor may be configured to configure and store routine information on function execution in a memory, and, when the received intent analysis result information is related to at least one of the routines defined in the stored routine information, automatically execute the remaining routines included in the routine information.

According to an artificial intelligence device according to at least one embodiment of the various embodiments of the present disclosure, the processor may be configured to provide an utterance agent including at least one recommended query, and wherein the at least one recommended query is written based on a recommended keyword configured based on at least one of intent analysis factors.

According to an operating method of an artificial intelligence device according to at least one embodiment of the various embodiments of the present disclosure, the method may further include receiving a user input; transmitting the user input to a server; receiving response information including intent analysis result information for the user input from the server; and performing at least one operation among outputting information and executing a function according to the response information, wherein the intent analysis result information includes an intent analysis result for the user input that has been primarily processed based on at least one intent analysis factor transmitted to the server.

According to an operating method of an artificial intelligence device according to at least one embodiment of the various embodiments of the present disclosure, the method may further include receiving user feedback data according to the at least one operation performed; updating the one or more intent analysis factors based on the feedback data; and transmitting the updated intent analysis factors to the server.

According to the operating method of the artificial intelligence device according to at least one embodiment of the various embodiments of the present disclosure, the method may further comprise when outputting information according to intent analysis result information in the response information, information configured as a first version or a second version is provided based on one or more analysis factors transmitted to the server.

According to the operating method of the artificial intelligence device according to at least one embodiment of the various embodiments of the present disclosure, when executing a function according to the intent analysis result information in the response information, whether the function is capable of being executed is determined, and when the determination result indicates that the function is not capable of being executed, recommended function information is provided, and the recommended function is performed instead.

According to the operating method of the artificial intelligence device according to at least one embodiment of the various embodiments of the present disclosure, the method may further include detecting an event occurrence; extracting information on a previous user input, intent analysis result information, and function execution operation information; outputting information about at least one of recommended reward function information; and executing a recommended reward function.

According to the operating method of the artificial intelligence device according to at least one embodiment of the various embodiments of the present disclosure, the method may further include storing routine information on function performance; and when the received intent analysis result information is related to at least one of the routines defined in the stored routine information, automatically executing the remaining routines included in the routine information.

According to the operating method of the artificial intelligence device according to at least one embodiment of the various embodiments of the present disclosure, the method may further include providing an utter agent including at least one recommendation query, and wherein the at least one recommendation query is written based on a recommendation keyword configured based on at least one of the intent analysis factors.

Additional scopes of the applicability of the present invention will become apparent from the detailed description below. However, since various changes and modifications within the spirit and scope of the present invention can be clearly understood by those skilled in the art, it should be understood that the detailed description and specific embodiments such as the preferred embodiments of the present invention are given only as examples.

### [Effects of the Invention]

According to at least one of the various embodiments of the present disclosure, the quality of the voice recognition service can be improved and the user's satisfaction with the device can be maximized by deriving the optimal intent analysis result that matches various user inputs and providing corresponding information or performing a function.

### [Brief description of drawings]

FIG. 1 is a drawing for explaining a voice system according to an embodiment of the present invention.
FIG. 2 is a block diagram for explaining a configuration of an artificial intelligence device according to an embodiment of the present disclosure.
FIG. 3 is a block diagram for explaining a configuration of a voice service server according to an embodiment of the present invention.
FIG. 4 is a drawing for explaining an example of converting a voice signal into a power spectrum according to an embodiment of the present invention.
FIG. 5 is a block diagram for explaining a configuration of a processor for voice recognition and synthesis of an artificial intelligence device according to an embodiment of the present invention.
FIG. 6 is a drawing for explaining a horizontal mode and a vertical mode of a stand-type artificial intelligence device according to an embodiment of the present disclosure.
FIG. 7 is a block diagram for explaining a configuration of an artificial intelligence device according to another embodiment of the present disclosure.
FIG. 8 is an example of a detailed configuration block diagram of the processor of FIG. 7.
FIG. 9 is a flowchart illustrating an operation method of an artificial intelligence device according to an embodiment of the present disclosure.
FIG. 10 is a diagram illustrating an operation based on information regarding an intention analysis result considering time information in an artificial intelligence device according to an embodiment of the present disclosure.
FIGS. 11 and 12 are diagrams illustrating an operation based on information regarding an intention analysis result considering content information in an artificial intelligence device according to an embodiment of the present disclosure.
FIG. 13 is a diagram illustrating an operation based on information regarding an intention analysis result considering space information in an artificial intelligence device according to an embodiment of the present disclosure.
FIG. 14 is a diagram illustrating an operation based on information regarding an intention analysis result considering space information in an artificial intelligence device according to an embodiment of the present disclosure.
FIG. 15 is a diagram illustrating an operation based on information regarding an intention analysis result considering space information in an artificial intelligence device according to another embodiment of the present disclosure.
FIG. 16 is a drawing illustrating a method for processing user input of an artificial intelligence device according to another embodiment of the present disclosure.
FIG. 17 is a drawing illustrating a recommendation query through a speech agent according to an embodiment of the present disclosure.

### [Best Mode]

Hereinafter, the embodiments disclosed in this specification will be described in detail with reference to the attached drawings. Regardless of the drawing symbols, identical or similar components will be given the same reference numbers and redundant descriptions thereof will be omitted. The suffixes "-module" and "-part" used for components in the following description are given or used interchangeably only for the convenience of writing the specification, and do not have distinct meanings or roles in themselves. In addition, when describing the embodiments disclosed in this specification, if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the spirit and technical scope of the present invention.

Terms including ordinal numbers such as first, second, etc. may be used to describe various components, but the components are not limited by the terms. The terms are used only for the purpose of distinguishing one component from another.

When a component is referred to as being "connected" or "connected" to another component, it should be understood that it may be directly connected or connected to that other component, but that there may be other components in between. On the other hand, when a component is referred to as being "directly connected" or "directly connected" to another component, it should be understood that there are no other components in between.

The 'AI device' described in this specification may include a mobile phone, a smart phone, a laptop computer, an AI device for digital broadcasting, a personal digital assistant (PDA), a portable multimedia player (PMP), a navigation device, a slate PC, a tablet PC, an ultrabook, a wearable device (e.g., a smartwatch, a smart glass, a head mounted display (HMD)), etc.

However, the AI device according to the embodiment described in this specification may also be applied to fixed AI devices such as a smart TV, a desktop computer, a digital signage, a refrigerator, a washing machine, an air conditioner, a dishwasher, etc.

In addition, the AI device according to the embodiment of the present invention may also be applied to a fixed or movable robot.

In addition, the AI device according to the embodiment of the present invention may perform the function of a voice agent (or a speech agent). A voice agent may be a program that recognizes a user's voice and outputs a response appropriate to the recognized user's voice as a voice.

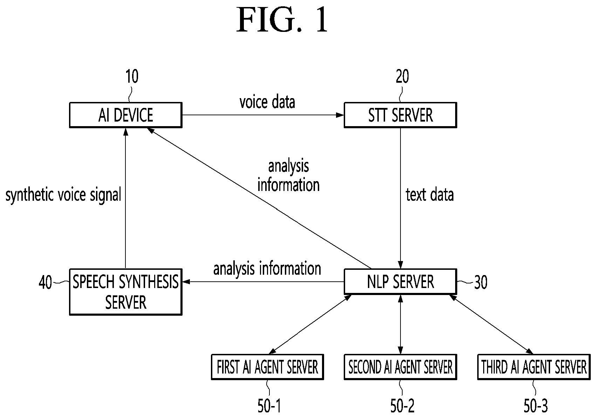

FIG. 1 is a diagram for explaining a voice service system according to an embodiment of the present invention.

The voice service may include at least one of a voice recognition and a voice synthesis service. The voice recognition and synthesis process may include a process of converting a speaker's (or user's) voice data into text data, analyzing the speaker's intention based on the converted text data, converting text data corresponding to the analyzed intention into synthetic voice data, and outputting the converted synthetic voice data.

For the voice recognition and synthesis process, a voice service system, such as that illustrated in FIG. 1, may be used.

Referring to FIG. 1, the voice service system may include an artificial intelligence device 10, a speech-to-text (STT) server 20, a natural language processing (NLP) server 30, and a voice synthesis server 40. A plurality of AI agent servers 50-1 to 50-3 communicate with the NLP server 30 and may be included in the voice service system.

Meanwhile, the STT server 20, the NLP server 30, and the voice synthesis server 40 may exist as separate servers as illustrated, or may be included in one server 200. In addition, the plurality of AI agent servers 50-1 to 50-3 may also exist as separate servers or may be included in one server.

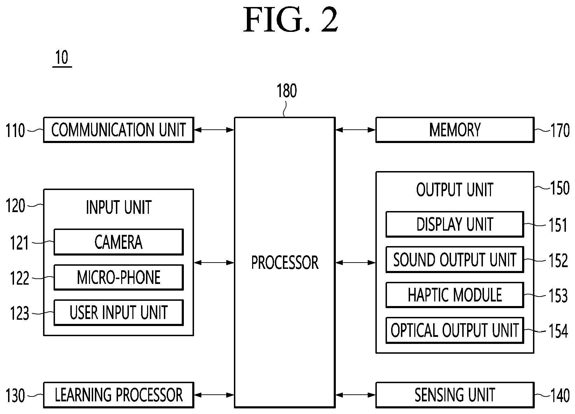

The AI device 10 may transmit a voice signal corresponding to the speaker's voice received through the microphone 122 of FIG. 2 to the STT server 20.

The STT server 20 may convert voice data received from the AI device 10 into text data.

The STT server 20 may use a language model to increase the accuracy of voice-to-text conversion.

A language model may refer to a model that can calculate the probability of a sentence or calculate the probability of a next word given the previous words.

For example, a language model may include probabilistic language models such as a Unigram model, a Bigram model, an N-gram model, etc.

A Unigram model is a model that assumes that the inflection of all words is completely independent of each other, and calculates the probability of a word string as the product of the probabilities of each word.

A Bigram model is a model that assumes that the inflection of a word depends on only one previous word.

An N-gram model is a model that assumes that the inflection of a word depends on (n-1) previous words.

That is, the STT server 20 can use a language model to determine whether text data converted from voice data is properly converted, and thereby increase the accuracy of conversion to text data.

The NLP server 30 can receive text data from the STT server 20. According to an embodiment, the STT server 20 may be included in the NLP server 30.

The NLP server 30 can perform intent analysis on the text data based on the received text data.

The NLP server 30 can transmit intent analysis information indicating the result of performing intent analysis to the artificial intelligence device 10.

As another example, the NLP server 30 can transmit intent analysis information to the speech synthesis server 40. The speech synthesis server 40 can generate a synthetic voice based on the intent analysis information and transmit the generated synthetic voice to the artificial intelligence device 10.

The NLP server 30 can sequentially perform a morphological analysis step, a syntactic analysis step, a speech act analysis step, and a dialogue processing step on the text data to generate intent analysis information.

The morphological analysis step is the step of classifying text data corresponding to the user's spoken speech into morpheme units, which are the smallest units that have meaning, and determining which part of speech each classified morpheme has.

The syntactic analysis step is the step of using the results of the morphological analysis step to classify text data into noun phrases, verb phrases, and adjective phrases, and determining what kind of relationship exists between each of the classified phrases.

Through the syntactic analysis step, the subject, object, and modifiers of the user's spoken speech can be determined.

The speech act analysis step is the step of analyzing the user's spoken speech intention using the results of the syntactic analysis step. Specifically, the speech act analysis step is the step of determining the intent of the sentence, such as whether the user is asking a question, making a request, or simply expressing emotions.

The dialogue processing step is the step of using the results of the speech act analysis step to determine whether to answer the user's speech, respond, or ask a question asking for additional information.

After the dialogue processing step, the NLP server 30 can generate intent analysis information including at least one of a response, response, and additional information inquiry for the intent of the user's speech.

The NLP server 30 can transmit a search request to a search server (not shown) to search for information that matches the intent of the user's speech, and can receive search information corresponding to the search request.

If the intent of the user's speech is to search for content, the search information can include information about the searched content.

The NLP server 30 can transmit the search information to the artificial intelligence device 10, and the artificial intelligence device 10 can output the search information.

Meanwhile, the NLP server 30 can also receive text data from the artificial intelligence device 10. For example, if the artificial intelligence device 10 supports a voice-to-text conversion function, the artificial intelligence device 10 can convert voice data into text data and transmit the converted text data to the NLP server 30.

The voice synthesis server 40 can generate a synthetic voice by combining previously stored voice data.

The voice synthesis server 40 can record the voice of a person selected as a model and divide the recorded voice into syllables or words.

The voice synthesis server 40 can store the divided voice into syllables or words in an internal or external database.

The voice synthesis server 40 can search for syllables or words corresponding to given text data from the database and synthesize a combination of the searched syllables or words to generate a synthetic voice.

The voice synthesis server 40 can store a plurality of voice language groups corresponding to each of a plurality of languages.

For example, the voice synthesis server 40 can include a first voice language group recorded in Korean and a second voice language group recorded in English.

The voice synthesis server 40 can translate text data of a first language into text of a second language, and generate a synthetic voice corresponding to the translated text of the second language using a second speech language group.

The voice synthesis server 40 can transmit the generated synthetic voice to the artificial intelligence device 10.

The voice synthesis server 40 can receive analysis information from the NLP server 30. The analysis information can include information analyzing the intention of the voice spoken by the user.

The voice synthesis server 40 can generate a synthetic voice reflecting the intention of the user based on the analysis information.

In one embodiment, at least two of the STT server 20, the NLP server 30, and the voice synthesis server 40 can be implemented as one server.

The functions of the STT server 20, NLP server 30, and voice synthesis server 40 described above may also be performed by the artificial intelligence device 10. For this purpose, the artificial intelligence device 10 may include one or more processors.

Each of the plurality of AI agent servers 50-1 to 50-3 may transmit search information to the NLP server 30 or the artificial intelligence device 10 according to the request of the NLP server 30.

If the intent analysis result of the NLP server 30 is a content search request, the NLP server 30 may transmit the content search request to one or more of the plurality of AI agent servers 50-1 to 50-3 and receive the content search result from the server.

The NLP server 30 may transmit the received search result to the artificial intelligence device 10.

FIG. 2 is a block diagram for explaining the configuration of an artificial intelligence device 10 according to an embodiment of the present disclosure.

Referring to FIG. 2, the artificial intelligence device 10 may include a communication unit 110, an input unit 120, a learning processor 130, a sensing unit 140, an output unit 150, a memory 170, and a processor 180.

The communication unit 110 may transmit/receive data with external devices using wired/wireless communication technology. For example, the communication unit 110 may transmit/receive sensor information, user input, learning models, control signals, etc. with external devices.

At this time, the communication technology used by the communication unit 110 includes GSM (Global System for Mobile communication), CDMA (Code Division Multi Access), LTE (Long Term Evolution), LTE-A (advanced), 5G, WLAN (Wireless LAN), Wi-Fi (Wireless-Fidelity), Bluetooth (Bluetooth^{™}), RFID (Radio Frequency Identification), Infrared Data Association (IrDA), ZigBee, NFC (Near Field Communication), etc.

The input unit 120 can obtain various types of data.

The input unit 120 can include a camera for inputting a video signal, a microphone for receiving an audio signal, a user input unit for receiving information from a user, etc. Here, the camera or microphone may be treated as a sensor, and the signal obtained from the camera or microphone may be referred to as sensing data or sensor information.

The input unit 120 can obtain learning data and a learning model for model learning. When obtaining output using the input unit 120, input data to be used can be obtained. The input unit 120 may obtain unprocessed input data, in which case the processor 180 or the learning processor 130 may extract input features as preprocessing for the input data.

The input unit 120 may include a camera (Camera, 121) for inputting image signals, a microphone (Microphone, 122) for receiving audio signals, and a user input unit (User Input Unit, 123) for receiving information from a user.

Voice data or image data collected by the input unit 120 may be analyzed and processed as a user's control command.

The input unit 120 is for inputting image information (or signal), audio information (or signal), data, or information input from a user, and for inputting image information, the artificial intelligence device 10 may be equipped with one or more cameras 121.

The camera 121 processes image frames such as still images or moving images obtained by the image sensor in video call mode or shooting mode. The processed image frames may be displayed on the display unit 151 or stored in the memory 170.

The microphone 122 processes external audio signals into electrical voice data. The processed audio data may be utilized in various ways depending on the function being performed (or the application program being executed) in the artificial intelligence device 10. Meanwhile, various noise removal algorithms may be applied to the microphone 122 to remove noise generated in the process of receiving external audio signals.

The user input unit 123 is for receiving information from a user, and when information is input through the user input unit 123, the processor 180 may control the operation of the artificial intelligence device 10 to correspond to the input information.

The user input unit 123 may include a mechanical input means (or a mechanical key, for example, a button located on the front/rear or side of the artificial intelligence device 10, a dome switch, a jog wheel, a jog switch, etc.) and a touch input means. As an example, the touch input means may be formed of a virtual key, a soft key, or a visual key displayed on a touch screen through software processing, or a touch key placed on a part other than the touch screen.

The learning processor 130 may train a model composed of an artificial neural network using learning data. Here, the learned artificial neural network may be referred to as a learning model. The learning model may be used to infer a result value for new input data that is not learning data, and the inferred value may be used as a basis for judgment to perform a certain operation.

The running processor 130 may include a memory integrated or implemented in the artificial intelligence device 10. Alternatively, the running processor 130 may be implemented using a memory 170, an external memory directly coupled to the artificial intelligence device 10, or a memory maintained in an external device.

The sensing unit 140 may obtain at least one of internal information of the artificial intelligence device 10, information about the surrounding environment of the artificial intelligence device 10, and user information using various sensors.

At this time, the sensors included in the sensing unit 140 include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, a light sensor, a microphone, a lidar, a radar, etc.

The output unit 150 may generate output related to vision, hearing, or touch, etc.

The output unit 150 may include at least one of a display unit 151, a sound output unit 152, a haptic module 153, and an optical output unit 154.

The display unit 151 displays (outputs) information processed in the artificial intelligence device 10. For example, the display unit 151 may display information on the execution screen of an application program running in the artificial intelligence device 10, or UI (User Interface) or GUI (Graphical User Interface) information according to such execution screen information.

The display unit 151 may be formed as a touch sensor and a mutual layer structure or formed as an integral body, thereby implementing a touch screen. This touch screen may function as a user input unit 123 that provides an input interface between the artificial intelligence device 10 and the user, and may provide an output interface between the terminal 100 and the user.

The audio output unit 152 may output audio data received from the communication unit 110 or stored in the memory 170 in a call signal reception mode, call mode, recording mode, voice recognition mode, broadcast reception mode, etc.

The sound output unit 152 may include at least one of a receiver, a speaker, and a buzzer.

The haptic module 153 generates various tactile effects that the user can feel. A representative example of the tactile effect generated by the haptic module 153 may be vibration.

The light output unit 154 outputs a signal to notify the occurrence of an event using light from a light source of the artificial intelligence device 10. Examples of events generated by the artificial intelligence device 10 may include message reception, call signal reception, missed call, alarm, schedule notification, email reception, information reception through an application, etc.

The memory 170 may store data that supports various functions of the artificial intelligence device 10. For example, the memory 170 may store input data, learning data, learning models, learning history, etc. acquired from the input unit 120.

The processor 180 can determine at least one executable operation of the artificial intelligence device 10 based on information determined or generated using a data analysis algorithm or a machine learning algorithm. And the processor 180 can control the components of the artificial intelligence device 10 to perform the determined operation.

The processor 180 can request, search, receive, or utilize data of the learning processor 130 or the memory 170, and control the components of the artificial intelligence device 10 to perform a predicted operation or an operation determined to be desirable among the at least one executable operation.

If the connection of an external device is required to perform the determined operation, the processor 180 can generate a control signal for controlling the external device and transmit the generated control signal to the external device.

The processor 180 can obtain intention information for a user input and determine the user's requirement based on the obtained intention information.

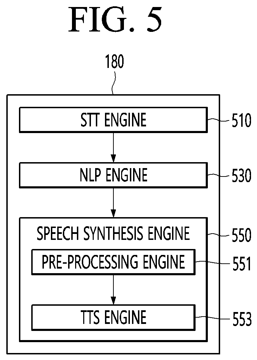

The processor 180 can obtain intention information corresponding to the user input by using at least one of the STT engine (410 of FIG. 5) for converting voice input into a string or the NLP engine (430 of FIG. 5) for obtaining intention information of natural language.

At least one of the STT engine (410 of FIG. 5) or the NLP engine (430 of FIG. 5) can be configured with an artificial neural network at least partly learned according to a machine learning algorithm. And at least one of the STT engine (410 of FIG. 5) or the NLP engine (430 of FIG. 5) can be learned by the learning processor 130, learned by the learning processor 240 of the AI server 200, or learned by distributed processing of these.

The processor 180 can collect history information including the operation content of the artificial intelligence device 10 or the user's feedback on the operation, and store it in the memory 170 or the learning processor 130, or transmit it to an external device such as an AI server 200. The collected history information can be used to update the learning model.

The processor 180 can control at least some of the components of the artificial intelligence device 10 in order to drive the application program stored in the memory 170. Furthermore, the processor 180 can operate two or more of the components included in the artificial intelligence device 10 in combination with each other in order to drive the application program.

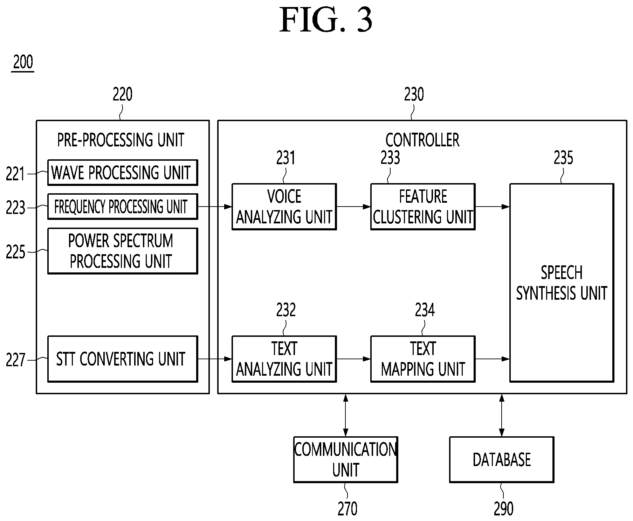

FIG. 3 is a block diagram for explaining the configuration of a voice service server 200 according to an embodiment of the present invention.

The voice service server 200 may include one or more of the STT server 20, the NLP server 30, and the voice synthesis server 40 illustrated in FIG. 1. The voice service server 200 may be referred to as a server system.

Referring to FIG. 3, the voice service server 200 may include a preprocessing unit 220, a controller 230, a communication unit 270, and a database 290.

The preprocessing unit 220 may preprocess voice received through the communication unit 270 or voice stored in the database 290.

The preprocessing unit 220 may be implemented as a separate chip from the controller 230 or may be implemented as a chip included in the controller 230.

The preprocessing unit 220 can receive a voice signal (spoken by a user) and filter out noise signals from the voice signal before converting the received voice signal into text data.

If the preprocessing unit 220 is equipped in the artificial intelligence device 10, it can recognize a trigger word to activate voice recognition of the artificial intelligence device 10. The preprocessing unit 220 converts the trigger word received through the microphone 121 into text data, and if the converted text data is text data corresponding to the previously stored trigger word, it can be determined that the trigger word has been recognized.

The preprocessing unit 220 can convert the voice signal from which noise has been removed into a power spectrum.

The power spectrum can be a parameter indicating which frequency components are included in the waveform of a temporally varying voice signal and at what size.

The power spectrum illustrates the distribution of the amplitude square value according to the frequency of the waveform of the voice signal.

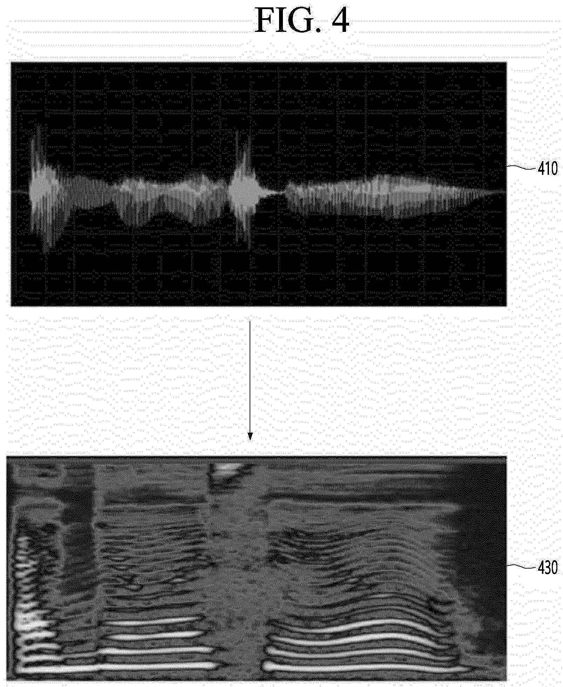

This will be explained with reference to FIG. 4.

FIG. 4 is a diagram illustrating an example of converting a voice signal 410 into a power spectrum 430 according to an embodiment of the present invention.

Referring to FIG. 4, a voice signal 410 is illustrated. The voice signal 410 may be a signal received from an external device or stored in advance in a memory 170.

The x-axis of the voice signal 410 may represent time, and the y-axis may represent the amplitude.

The power spectrum processing unit 225 may convert a voice signal 410 whose x-axis is the time axis into a power spectrum 430 whose x-axis is the frequency axis.

The power spectrum processing unit 225 can convert the voice signal 410 into a power spectrum 430 using a fast Fourier transform (FFT).

The x-axis of the power spectrum 430 represents the frequency, and the y-axis represents the square value of the amplitude.

FIG. 3 will be described again.

The functions of the preprocessing unit 220 and the controller 230 described in FIG. 3 can also be performed in the NLP server 30.

The preprocessing unit 220 can include a wave processing unit 221, a frequency processing unit 223, a power spectrum processing unit 225, and an STT conversion unit 227.

The wave processing unit 221 can extract the waveform of the voice.

The frequency processing unit 223 can extract the frequency band of the voice.

The power spectrum processing unit 225 can extract the power spectrum of the voice.

The power spectrum can be a parameter that indicates which frequency components are included in the waveform and at what size when a temporally varying waveform is given.

The STT conversion unit 227 can convert the voice into text.

The STT conversion unit 227 can convert the voice of a specific language into text of the corresponding language.

The controller 230 can control the overall operation of the voice service server 200.

The controller 230 can include a voice analysis unit 231, a text analysis unit 232, a feature clustering unit 233, a text mapping unit 234, and a voice synthesis unit 235.

The voice analysis unit 231 can extract voice characteristic information by using one or more of the voice waveform, voice frequency band, and voice power spectrum preprocessed in the preprocessing unit 220.

The voice characteristic information can include one or more of the speaker's gender information, the speaker's voice (or tone), pitch, the speaker's speech style, the speaker's speech rate, and the speaker's emotion.

In addition, the voice characteristic information can further include the speaker's tone.

The text analysis unit 232 can extract key expression phrases from the text converted by the STT conversion unit 227.

If the text analysis unit 232 detects a difference in tone between phrases in the converted text, it can extract the phrase with the different tone as the key expression phrase.

The text analysis unit 232 can determine that the tone has changed if the frequency band between phrases has changed by more than a preset band.

The text analysis unit 232 can also extract key words within the phrases of the converted text. Key words may be nouns within the phrases, but this is only an example.

The feature clustering unit 233 can classify the speaker's speech type using the characteristic information of the voice extracted from the voice analysis unit 231.

The feature clustering unit 233 can classify the speaker's speech type by assigning weights to each of the type items that constitute the characteristic information of the voice.

The feature clustering unit 233 can classify the speaker's speech type using the attention technique of the deep learning model.

The text mapping unit 234 can translate the text converted into the first language into the text of the second language.

The text mapping unit 234 can map the text translated into the second language to the text of the first language.

The text mapping unit 234 can map the main expression phrases constituting the text of the first language to the corresponding phrases of the second language.

The text mapping unit 234 can map the speech types corresponding to the main expression phrases constituting the text of the first language to the phrases of the second language. This is to apply the classified speech types to the phrases of the second language.

The voice synthesis unit 235 can generate a synthesized voice by applying the speech types classified by the feature clustering unit 233 and the speaker's tone to the main expression phrases of the text translated into the second language by the text mapping unit 234.

The controller 230 can determine the user's speech characteristics using one or more of the transmitted text data or the power spectrum 430.

The user's speech characteristics can include the user's gender, the user's pitch, the user's tone, the user's speech topic, the user's speech speed, the user's voice volume, etc.

The controller 230 can obtain the frequency of the voice signal 410 and the amplitude corresponding to the frequency using the power spectrum 430.

The controller 230 can determine the gender of the user who has spoken the voice using the frequency band of the power spectrum 430.

For example, the controller 230 can determine the user's gender as male if the frequency band of the power spectrum 430 is within a preset first frequency band range.

The controller 230 can determine the gender of the user as female if the frequency band of the power spectrum 430 is within a preset second frequency band range. Here, the second frequency band range may be larger than the first frequency band range.

The controller 230 can determine the pitch of the voice using the frequency band of the power spectrum 430.

For example, the controller 230 can determine the pitch of the voice according to the amplitude size within a specific frequency band range.

The controller 230 can determine the tone of the user using the frequency band of the power spectrum 430. For example, the controller 230 can determine a frequency band among the frequency bands of the power spectrum 430 in which the amplitude size is greater than a certain size as the main tone range of the user, and determine the determined main tone range as the tone of the user.

The controller 230 can determine the user's speech speed through the number of syllables spoken per unit time from the converted text data.

The controller 230 can determine the user's speech topic using the Bag-Of-Word Model technique for the converted text data.

The Bag-Of-Word Model technique is a technique that extracts frequently used words based on the word frequency in a sentence. Specifically, the Bag-Of-Word Model technique is a technique that extracts unique words from a sentence, expresses the frequency of each extracted word as a vector, and determines the speech topic as a feature.

For example, if words such as <running> and <physical strength> frequently appear in the text data, the controller 230 can classify the user's speech topic as exercise.

The controller 230 can determine the user's speech topic from the text data using a known text categorization technique. The controller 230 can extract keywords from text data and determine the subject of the user's speech.

The controller 230 can determine the user's vocal volume by considering amplitude information in the entire frequency band.

For example, the controller 230 can determine the user's vocal volume based on the average or weighted average of amplitudes in each frequency band of the power spectrum.

The communication unit 270 can perform wired or wireless communication with an external server.

The database 290 can store a voice in a first language included in the content.

The database 290 can store a synthetic voice in which a voice in a first language is converted into a voice in a second language.

The database 290 can store a first text corresponding to a voice in a first language and a second text in which the first text is translated into a second language.

The database 290 may store various learning models required for voice recognition.

Meanwhile, the processor 180 of the artificial intelligence device 10 illustrated in FIG. 2 may be equipped with the preprocessing unit 220 and the controller 230 illustrated in FIG. 3.

That is, the processor 180 of the artificial intelligence device 10 may perform the functions of the preprocessing unit 220 and the controller 230.

FIG. 5 is a block diagram illustrating the configuration of a processor for voice recognition and synthesis of an artificial intelligence device 10 according to an embodiment of the present invention.

That is, the voice recognition and synthesis process of FIG. 5 may be performed by a running processor 130 or processor 180 of an artificial intelligence device 10 without going through a server.

Referring to FIG. 5, the processor 180 of the artificial intelligence device 10 may include an STT engine 510, an NLP engine 530, and a voice synthesis engine 550.

Each engine may be either hardware or software.

The STT engine 510 may perform the function of the STT server 20 of FIG. 1. That is, the STT engine 510 may convert voice data into text data.

The NLP engine 530 can perform the function of the NLP server 30 of FIG. 1. That is, the NLP engine 530 can obtain intent analysis information indicating the speaker's intent from the converted text data.

The voice synthesis engine 550 can perform the function of the voice synthesis server 40 of FIG. 1.

The voice synthesis engine 550 can search for syllables or words corresponding to given text data from a database, and synthesize a combination of the searched syllables or words to generate a synthesized voice.

The voice synthesis engine 550 can include a preprocessing engine 551 and a TTS engine 553.

The preprocessing engine 551 can preprocess text data before generating a synthesized voice.

Specifically, the preprocessing engine 551 performs tokenization, which divides text data into tokens, which are meaningful units.

After tokenization, the preprocessing engine 551 can perform a cleansing operation to remove unnecessary characters and symbols for noise removal.

After that, the preprocessing engine 551 can integrate word tokens with different expression methods to generate the same word token.

After that, the preprocessing engine 551 can remove meaningless word tokens (stopwords).

The TTS engine 553 can synthesize voices corresponding to the preprocessed text data and generate synthesized voices.

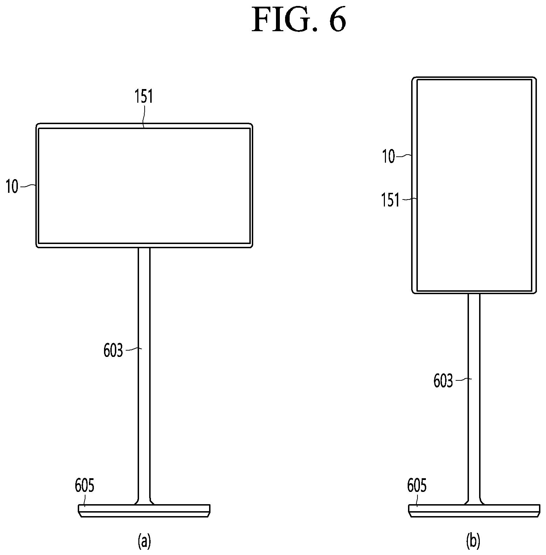

FIG. 6 is a drawing for explaining the horizontal mode and the vertical mode of the stand-type artificial intelligence device 10 according to an embodiment of the present disclosure.

Referring to FIG. 6(a) and FIG. 6(b), the stand-type artificial intelligence device 10 is illustrated.

A shaft 603 and a stand base 605 may be connected to the artificial intelligence device 10.

The shaft 603 may connect the artificial intelligence device 10 and the stand base 605. The shaft 603 may be extended vertically.

The lower end of the shaft 603 may be connected to the edge of the stand base 605.

The lower end of the shaft 603 may be rotatably connected to the periphery of the stand base 605.

The artificial intelligence device 10 and the shaft 603 may be rotated around a vertical axis with respect to the stand base 605.

The upper end of the shaft 603 may be connected to the rear of the artificial intelligence device 10.

The stand base 605 may serve to support the artificial intelligence device 10.

The artificial intelligence device 10 may be configured to include a shaft 603 and a stand base 605.

The artificial intelligence device 10 may rotate around a point where the upper part of the shaft 603 and the rear part of the display 151 meet.

FIG. 6(a) may illustrate that the display 151 operates in a horizontal mode in which the horizontal length is greater than the vertical length, and FIG. 6(b) may illustrate that the display 151 operates in a horizontal mode in which the vertical length is greater than the horizontal length.

The user may hold and move the stand-type display device. That is, unlike fixed devices, the stand-type artificial intelligence device 10 has improved mobility, so the user is not restricted by the placement location.

Referring back to FIG. 1, the NLP server 30 may receive text data for user input from the STT server 20, for example, and sequentially perform a morphological analysis step, a syntactic analysis step, a speech act analysis step, and a dialogue processing step on the text data to generate intent analysis result information (for convenience, referred to as 'first intent analysis result information').

When the artificial intelligence device 10 receives the first intent analysis result information from the NLP server 30 (or the voice synthesis server 40 of FIG. 1), it may perform a corresponding action. The corresponding action may include configuring and providing information (or recommendation information) based on the first intent analysis result information, performing a function (or recommendation function), etc.

However, the following describes deriving intent analysis result information (for convenience, referred to as 'second intent analysis result') by additionally considering at least one or more of the various intent analysis factors described below in addition to the first intent analysis result information described above.

According to an embodiment, the artificial intelligence device 10 may derive the first intent analysis result information, and then derive the second intent analysis result information based on the aforementioned intent analysis factor from the derived first intent analysis result information. Meanwhile, the artificial intelligence device 10 may receive both the first intent analysis result information and the second intent analysis result information through, for example, the NLP server 30 or the voice synthesis server 40 of FIG. 1, or may receive only the second intent analysis result information.

According to another embodiment, instead of deriving the first intent analysis result information separately, the aforementioned intent analysis factors may be considered together during the intent analysis process to derive a single intent analysis result information.

For convenience of explanation, the following description will be given as an example a case where the NLP server 30 may generate both the first intent analysis result information and the second intent analysis result information, and the artificial intelligence device 10 receives only the first and second intent analysis result information or the second intent analysis result information through the NLP server 30 or the voice synthesis server 40.

The intention analysis factors related to the derivation of the second intention analysis result information may include, for example, time, space, user, schedule, content, etc. Individual intention analysis factors are described in detail in the relevant section.

Meanwhile, the above-described intention analysis factors may be individually applied for intention analysis, or at least two or more intention analysis factors may be applied simultaneously or sequentially for intention analysis. In this way, when multiple intention analysis factors are applied for intention analysis, each intention analysis factor may or may not be assigned the same priority or weight. Meanwhile, at least two or more of the intention analysis factors may be grouped and assigned and applied together for intention analysis. In this case, one intention analysis factor may belong to multiple groups.

In relation to this, the number, type, etc. of the intention analysis factors may be registered in advance in the artificial intelligence device 10 and the voice service server 200, or may be determined arbitrarily.

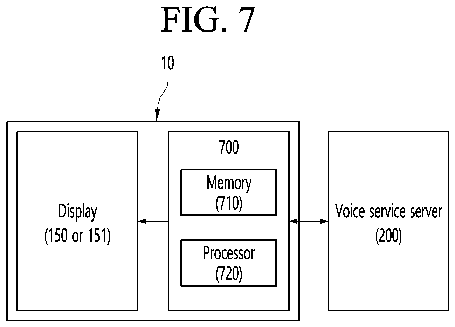

FIG. 7 is a block diagram of an artificial intelligence device 10 according to another embodiment of the present disclosure.

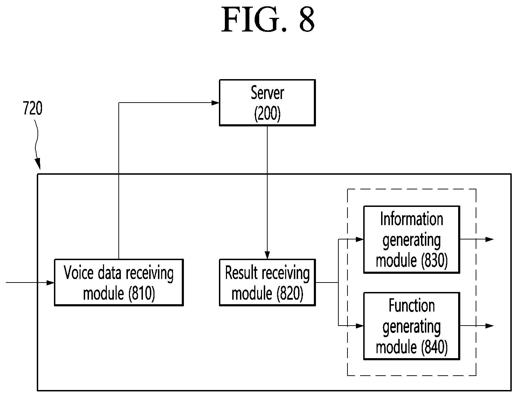

FIG. 8 is an example of a detailed block diagram of a processor 720 of FIG. 7.

In FIG. 7, only the configuration related to the response operation according to the intention analysis result of the artificial intelligence device 10 according to one embodiment of the present disclosure is disclosed, but it is not limited thereto.

As described above, the voice service server 200 may include the STT server 20 and the NLP server 30 illustrated in FIG. 1, and may also include a voice synthesis server 40 according to an embodiment. Hereinafter, when the term 'voice service server 200' is described, it may indicate the NLP server 30, or may mean including at least one of the STT server 20 and the voice synthesis server 40. However, it is not limited thereto.

Meanwhile, for the voice recognition/voice synthesis processing process between the artificial intelligence device 10 and the voice service server 200, refer to the contents disclosed in the aforementioned FIGS. 1 to 5, and redundant description is omitted here.

According to the embodiment, as illustrated in FIG. 5, some of the functions of the voice service server 200 may be performed in the artificial intelligence device 10.

The artificial intelligence device 10 may be configured to include a display 150 or 151 and a processing unit 700.

The processing unit 700 may be configured to include a memory 710 and a processor 720.

The processing unit 700 may be connected to the voice service server 200 in various ways to exchange data.

The memory 710 may store various data, for example, data received or processed by the processing unit 700.

The memory 710 can store the intent analysis result information processed by the processing unit 700 or received from the voice service server 200.

The memory 710 can store the corresponding action information related to the stored intent analysis result information under the control of the processing unit 700 or the processor 720, and can provide it so that it can be provided to the user through the display 150 or 151.

Referring to FIGS. 7 and **8****,** the processor 720 can include a voice data receiving module 810, a result receiving module 820, and a corresponding action module. The corresponding action module can include an information generating module 830 and a function generating module 840. However, the present disclosure is not limited thereto.

The voice data receiving module 810 can receive a user's input, i.e., a voice input (but not limited thereto), and transmit the received user's voice input to the voice service server 200. According to an embodiment, the voice data receiving module 810 can receive a user's input (e.g., text data) other than a voice input and transmit it to the voice service server 200 as described above.

The result receiving module 820 can receive an intention analysis result corresponding to the user's voice input transmitted from the voice service server 200 through the voice data receiving module 810.

The processor 720 can determine a corresponding action based on the result of parsing the intention analysis result information received through the result receiving module 820. If the determined corresponding action is related to providing information (or recommended information), the information generation module 830 can be operated. If the determined action is related to performing a function (or a recommended function), the function generation module 840 may operate.

Referring to FIG. 8, it is described that the voice data receiving module 810 transmits the voice data to the server 200, but another module (for example, the result receiving module 820, etc.) may perform the corresponding action instead.

Meanwhile, referring to FIG. 8, for convenience of explanation, the voice data receiving module 810 is described as transmitting the user input to the voice service server 200 without separate processing, but as shown in FIG. 5, the STT engine 510 and the NLP engine 530 may process the user input and then transmit the processed data to the voice service server 200, or the artificial intelligence device 10 may derive the intent analysis result information based on the processed data and transmit only the user input and the derived intent analysis result information to the server 200. Here, the intent analysis result information represents, for example, the second intent analysis result information described above, but is not limited thereto, and may include the first intent analysis result information depending on the embodiment.

Meanwhile, the processor 720 may have the same configuration as the processor 180 of FIG. 2 described above, but may also have a separate configuration.

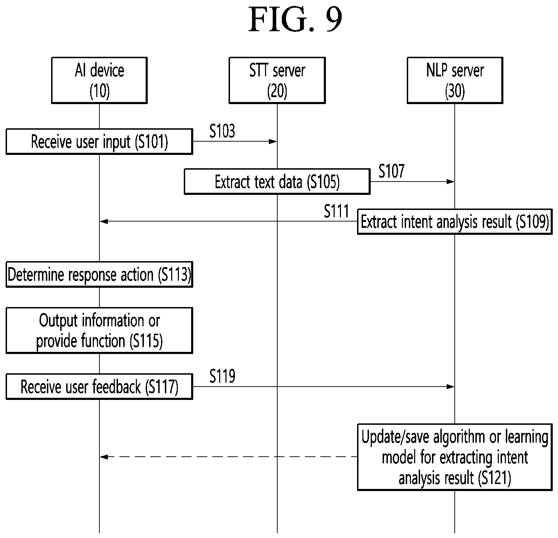

FIG. 9 is a drawing illustrating a method for processing user input of a voice service system according to an embodiment of the present disclosure.

An artificial intelligence device 10 can receive a user's input (S101).

In the present disclosure, the user's input means a voice input for convenience of explanation, but is not limited thereto. For example, the user's input may be a text input or an input by a combination of text input and voice input.

The user's input may be received through a remote control device (not shown), but is not limited thereto. Meanwhile, the remote control device may include a remote control used in the artificial intelligence device 10. Alternatively, the remote control device may include at least one of an AI speaker, a smartphone, a tablet PC, a wearable device, etc. The remote control device may be a device on which firmware/software, such as an application, program, API (Application Program Interface), etc., necessary for data communication such as voice input with the artificial intelligence device 10 are installed. In addition, the remote control device may be a device pre-registered in the artificial intelligence device 10.

The artificial intelligence device 10 may transmit the user input received in step S101 to the STT server 20 (S103).

According to an embodiment, if the user input is text data, the STT server 20 may transmit the received user input (text data) as is to the NLP server 30. Meanwhile, if the received user input is not voice data, the artificial intelligence device 10 may directly transmit the user input to the NLP server 30 instead of the STT server 20.

The STT server 20 may derive text data corresponding to the user input received through the artificial intelligence device 10 in step S103 (S105).

The STT server 20 can transmit text data corresponding to the user input derived in step S105 to the NLP server 30 (S107).

The NLP server 30 can perform an intention analysis process on the text data received from the STT server 20 through step S107 and derive intention analysis result information (S109). As described above, the intention analysis process can utilize at least one intention analysis factor among the intention analysis factors according to the present disclosure. Therefore, the intention analysis result information can correspond to or include the second intention analysis result information.

The NLP server 30 can return (or transmit) the intention analysis result information derived through step S109 to the artificial intelligence device 10 (S111).

The artificial intelligence device 10 can parse the intent analysis result information according to the user input returned from the NLP server 30 through step S111, and determine a corresponding action based on the intent analysis result information (S113).

The artificial intelligence device 10 can perform a function (or a recommendation function) or output information (e.g., information about recommendation information, a function, or a recommendation function, etc.) based on the corresponding action determined through step S113 (S115).

According to an embodiment, when the NLP server 30 provides the intent analysis result information, it can transmit the action control information corresponding to the action determined by the artificial intelligence device 10 described above, i.e., the function execution or information output.

According to an embodiment, when the NLP server 30 transmits the action control information together with the intent analysis result information, the artificial intelligence device 10 can recognize it as recommendation information or reference information. Accordingly, the AI device 10 can select or modify some or all of them and use them to determine a response action.

The AI device 10 can receive additional input from the user, for example, feedback from the user, in relation to the function or output information performed through step S115 (S117).

The AI device 10 can transmit the user's feedback to be received through step S117 to the NLP server 30 (S119).

The NLP server 30 can update and store the algorithm or AI learning model used to derive the previously performed intention analysis result based on the user's feedback received from the AI device 10 through step S119 (S121).

The NLP server 30 can return the fact that the algorithm has been updated in step S121 to the AI device 10, etc.

Below, the operation of the artificial intelligence device 10 is described based on each of the aforementioned intention analysis factors.

Meanwhile, as the use of voice recognition increases, voice recognition based on voice input related to weather, for example, is being widely used.

In the present disclosure, the user input for intention analysis is voice input, and the voice input is related to a request for weather information, but is not limited thereto.

First, the operation of the artificial intelligence device 10 based on the intention analysis result information considering time information as an intention analysis factor is as follows.

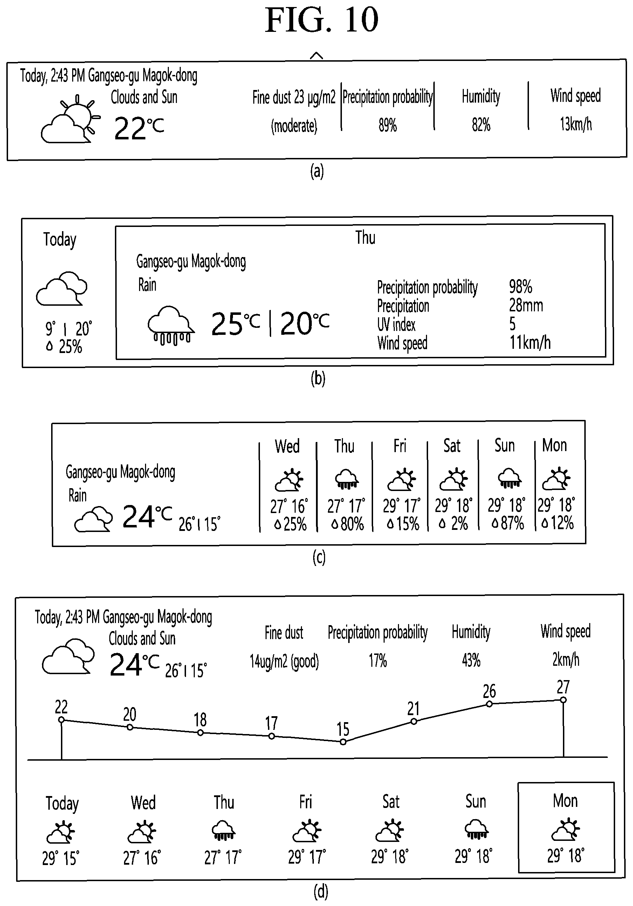

FIG. 10 is a drawing illustrating the operation based on the intention analysis result information considering time information in the artificial intelligence device 10 according to one embodiment of the present disclosure.

As one of the aforementioned intent analysis factors, time information can indicate at least one of a specific time (e.g., 9 AM, 8 PM, 10 PM, etc.), time zone (e.g., between 9 AM and 10 AM, between 8 PM and 10 PM, morning, evening, night, etc.), and day of the week (e.g., Monday to Friday, weekend, etc.).

The speech recognition function is most used in the evening (e.g., 7 PM) and is relatively less used in the early morning (e.g., 4 AM).

Table 1 illustrates examples of speech recognition usage (main speech information) at specific times or time zones in Korea, and Table 2 illustrates examples of speech recognition usage at specific times or time zones in Italy.

**[Table 1]**

| | | Korea | |
|---|---|---|---|
| | | Speech text | Speech frequency ratio (%) |
| 22 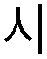 | 1 | Tomorrow's weather | 12.7 |
| | 2 | Weather | 10.3 |
| | 3 | How's the weather tomorrow | 7.3 |
| | 4 | Today's weather | 6.7 |
| | 5 | Tell me tomorrow's weather | 5.5 |
| 01 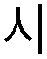 | 1 | Tell me tomorrow's weather | 12.8 |
| | 2 | Today's weather | 12.8 |
| | 3 | Weather | 10.3 |
| | 4 | Weekend weather | 7.7 |
| | 5 | Tell me the weather | 5.1 |

**[Table 2]**

| | | Italy | |
|---|---|---|---|
| | | Speech text | Speech frequen cy ratio (%) |
| 22 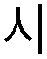 | 1 | Meteo (Weather forecast) | 7.3 |
| | 2 | Che tempo fa oggi(What's the weather today) | 6.7 |
| | 3 | Che tempo fa domani(What's the weather like tomorrow) | 6.1 |
| | 4 | Previsioni(Forecast) | 4.9 |
| | 5 | Che tempo fa(What's the weather) | 2.4 |
| 01 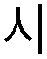 | 1 | Che tempo fa domani(What's the weather like tomorrow) | 9.7 |
| | 2 | Che tempo fa oggi?(What's the weather like today?) | 9.7 |
| | 3 | Meteo (Weather forecast) | 9.7 |
| | 4 | Meteo Trapani (Trapani weather) | 6.5 |
| | 5 | Previsioni Meteo del Fine Settimana (Weekend Weather Forecast) | 6.5 |

Referring to Tables 1 and 2, the user's utterances (utterance information) and ratios received through the voice recognition function related to the weather are exemplified, but this is only an example.

Referring to Table 1, in Korea, the utterance 'Tomorrow's weather' was uttered the most at 22:00, followed by utterances such as 'Weather', 'What's tomorrow's weather like', 'Today's weather', and 'Tell me the weather tomorrow', and at 01:00, the utterance 'Tell me the weather tomorrow' was uttered the most, followed by utterances such as 'Today's weather', 'Weather', 'Weekend weather', and 'Tell me the weather'.

Referring to Table 2, in Italy, the utterance 'weather forecast' was uttered the most at 22:00, followed by utterances such as 'What is the weather today', 'What's the weather like tomorrow', 'Forecasts', and 'What is the weather', and at 01:00, the utterances 'What's the weather like tomorrow', 'What's the weather like today', and 'Weather forecast' were uttered the most, followed by utterances such as 'Trapani weather' and 'Weekend Weather Forecast'.

In the artificial intelligence device 10, a day is set from 0:00 to 23:59:59, and a new day is set from 24:00.

However, in the case of a human, not the aforementioned artificial intelligence device 10, different intentions may be included for the same utterance based on the time of utterance.

For example, referring to Table 1 again, the utterance related to tomorrow's weather at 22:00 can be intentionally analyzed to mean tomorrow's weather. However, for the utterance 'Tell me the weather tomorrow', which has the highest number of utterances at 01:00 in Table 1, the date has already changed from the device's perspective, so it can be recognized and judged as asking to tell me the weather for the day after tomorrow based on the previous day, not tomorrow based on the previous day. However, in this case, unlike the artificial intelligence device 10, the user is still awake and not asleep, so it can still be recognized as the previous day, not tomorrow based on the absolute time, and from this perspective, 'Tell me the weather tomorrow' may be intended for tomorrow, not the day after tomorrow based on the previous day. In other words, let's assume that the current time is January 1, 2022, 01:00. At this time, if the user utters a voice input saying, "Tell me the weather for tomorrow," the artificial intelligence device 10 can provide the weather for January 2, 2022, but the speaker's intention may be to be informed of the weather for January 1, 2022. Since 1:00 is usually the date that has just changed, the speaker is likely to still recognize it as the previous date, so it is likely that the intention of the utterance is to request weather information for tomorrow, that is, the day, based on the day before, not tomorrow, based on 1:00, which is more likely to match the user's intention. Therefore, information about time information (e.g., the time of utterance) should be referred to in the intent analysis to more accurately match the intent of the utterance.

That is, if the first intention analysis result information, i.e., weather information for tomorrow based on 01:00, is provided by the NLP server 30 according to FIG. 1, it may not match the user's intention. For example, rather than using the first intention analysis result information according to FIG. 1 as it is, it may be desirable to use the second intention analysis result information that considers time information in addition to the first intention analysis result information, in which time information (e.g., information on the time of utterance) is further considered in response to the user's input.

Here, the time information may represent information on the time of utterance of the speaker, as described above. This time information may also represent information on time referenced based on at least one of statistical figures, user log data, and the general idea of time information of a user using or registered with the server 200. In other words, the relative time can be determined by mapping the time-related utterance content among the user's inputs to the absolute time of 24:00. For example, in Table 1, 22:00 and 01:00 are different dates in absolute time, but the AI device 10 can recognize 22:00 and 01 as the same date in relative time. For example, the AI device 10 or the NLP server 30 can determine that the term 'tomorrow' related to time information in the speech sentence 'tomorrow's weather', which is inputted at 22:00 and 01:00, is the same date in relative time. In general, the user may not recognize that the date has already changed at the time of speech, and even if so, there is a tendency to ignore the fact that the date has changed before going to sleep, which may cause an error in intention analysis. Therefore, as in the present disclosure, when analyzing the user's intention, it may be more in line with the user's intention to analyze and respond based on relative time rather than absolute time. At this time, the relative time does not exclude the concept of absolute time. For example, 14:00 can represent the same date in either the absolute or relative time concept. In other words, in the present disclosure, the concepts of absolute time and relative time may be mixed when analyzing the user's intention.

However, as an exception, if the user utters 'tomorrow's weather' at 01:00, it may be a request for tomorrow's weather based on the absolute time, that is, the day after tomorrow's weather based on the previous day, and depending on the embodiment, this problem may be resolved by providing the weather of the day (today) and tomorrow's weather together based on the absolute time.

In this case, the artificial intelligence device 10 provides today's weather and tomorrow's weather together, but if the probability of requesting today's weather is higher than the probability of requesting tomorrow's weather as a result of the intention analysis, the composition of the weather information provided at the same time may be differentiated. For example, as described below, the artificial intelligence device 10 may provide weather information with a relatively high probability by configuring it as full (or long) information, while providing weather information with a low probability by configuring it as simple (or short) information only. Meanwhile, simple information may be changed to be provided as full information depending on the user's choice.

In addition, the artificial intelligence device 10 can configure mapping information for related information as shown in Table 3 below and store it in the memory 710. However, the present disclosure is not limited to the contents defined in Table 3.

**[Table 3]**

| | 7-20:59 | 21-23:59 | 0-6:59 |
|---|---|---|---|
| 'How's the weather? ' | Displayed as today's (6/11) weather | Today's (6/11) weather + tomorrow's (6/12) weatherEx. | Displayed as today's (6/12) weather |
| | | 'It's 10 o'clock on June 11, and tonight's temperature is 00 degrees, humidity is 00, and it's expected to be warm. | |
| | | Tomorrow's weather | |
| | | on June 12 is expected to be sunny with a morning temperature of 00 degrees, a high of 00 degrees, and low humidity. ' | |
| 'How's the weather tomorrow ?' | Displayed as tomorrow' s (6/12) weather | Displayed as tomorrow's (6/12) weather | Today's (6/12) weather + tomorrow's (6/13) weatherEx. |
| | | | 'It's 2 o'clock on June 12, and tonight's morning temperature is expected to be 00 degrees, clear and sunny. Tomorrow's temperature on June 13 is expected to be 00 degrees ~' |

As shown in Table 3, the artificial intelligence device 10 provides only today's (6/11) weather information when a voice input of 'How's the weather?' is received between 7:00 and 20:59, but only tomorrow's (6/12) weather information is provided when a voice input of 'How's the weather tomorrow?' is received, and provides both today's (6/11) and tomorrow's (6/12) weather information when a voice input of 'How's the weather tomorrow?' is received between 21:00 and 23:59, but only tomorrow's (6/12) weather information is provided when a voice input of 'How's the weather tomorrow?' is received, and provides only today's (6/12) weather information when a voice input of 'How's the weather?' is received between 0:00 and 6:59 the next day, but only today's (6/12) weather information is provided when a voice input of 'How's the weather tomorrow?' is received, and provides both today's (6/12) and tomorrow's (6/13) weather information.

Next, the intent analysis result information considering the day of the week is described.

Table 1 and Table 2 may be the intent analysis result information that does not consider the day of the week information.

As an example of the intent analysis result information considering the day of the week information, for example, if the AI device 10 requests weather information on Monday through voice input, it can analyze the intent as a request for weekday weather information for the corresponding week, and if the weather information is requested on Tuesday and Wednesday (or may also include Thursday), it can analyze the intent as a request for weather information for today or tomorrow by referring to Tables 1 and 2 described above, and if the weather information is requested on Thursday or Friday, it can analyze the intent as a request for weekend weather or weather information from the same day to the weekend. However, this is only an example, and the present disclosure is not limited thereto.

According to an embodiment, the AI device 10 may combine the time information of Tables 1 and 2 with the day of the week information described above to generate mapping information such as Table 3, and use it for intention analysis of the user's input.

FIG. 10 may differentiate information provided based on the intention analysis result information according to an embodiment of the present disclosure, as described above.

FIG. 10(a) to 10(c) are examples of user interfaces for weather information, and FIG. 10(d) may be another example of a user interface for weather information.

For example, the AI device 10 may provide a simple version such as FIG. 10(a) to 10(c) or a full version such as FIG. 10(d) in providing weather information.

Next, the operation of the AI device 10 based on the intention analysis result information in which user information is considered as an intention analysis factor is as follows.

As one of the intent analysis factors, user information may mean, for example, whether a user is single/multiple users, whether a user is logged in, etc.

First, the AI device 10 may refer to whether a user is logged in as user information for intent analysis.

The AI device 10 may analyze the log data of the logged-in user, extract user history data for intent analysis based on the analyzed log data, and allow the extracted user history data to be reflected in the intent analysis. The user history data may include, for example, at least one or more of the user's recent or previous user input-intention analysis results and feedback thereon, recent content usage history, the user's AI device 10, content or voice command or voice input usage pattern, usage frequency or number of times, etc., or may be data separately generated for intent analysis reference based thereon.

Next, whether the user information is single user/multiple users can be determined based on, for example, information on whether multiple user inputs are input simultaneously or sequentially within a given time, information on whether the user viewing the AI device 10 is single or multiple, or information on whether the user input is for a single user or multiple users (e.g., a request to run a two-player game, etc.).

According to one embodiment, if the AI device 10 recognizes that the user information is a single user, it can provide simple information such as FIG. 10(a) to 10(c), and if it recognizes that the user information is a multiple user, it can provide full information such as FIG. 10(d).

According to another embodiment, if the logged-in user matches the subject of the user input, the AI device 10 may provide full information as shown in FIG. 10(d) in response to the intent analysis result information, but if not, that is, if the logged-in user and the speaker do not match each other, simple information such as one of FIG. 10(a) to 10(c) may be provided.

As an intent analysis factor, the user information may be combined with the time information and day of the week information described above as well as at least one or more pieces of information described below, and used for intent analysis.

Next, the operation of the AI device 10 based on the intent analysis result information in which scheduling information is considered as an intent analysis factor is as follows.

As one of the intent analysis factors, scheduling information may represent the user's scheduling information that can be obtained through the user's mobile device or a cloud server, etc. The artificial intelligence device 10 may obtain relevant information by accessing the information with the user's consent so that it can use the scheduling information.

For example, if the user inputs 'How is the weather?', the artificial intelligence device 10 may process it as described above in relation to Table 1 and Table 2, but may also obtain more precise intention analysis result information by referring to the scheduling information. For example, let's say that it is rainy today and the user has a workout schedule for the weekend. In this case, if the user inputs 'How is the weather?', the artificial intelligence device 10 may simply display today's or tomorrow's weather information, but it may also be due to concerns about whether the user can complete the scheduled schedule for the weekend, i.e., the outdoor workout schedule. Therefore, when the AI device 10 (or the NLP server 30) acquires the user's scheduling information, extracts information whose relevance to the user's input is higher than a threshold from the acquired scheduling information, and transmits the extracted information to the NLP server 30, the NLP server 30 can use the information for intention analysis of the user's input, and, for the user's input of 'How's the weather?', consider not only today's or tomorrow's weather or weekday weather, but also outdoor exercise schedules scheduled for the weekend, and decide what kind of weather information to provide. At this time, the scheduling information functions as only one intention analysis factor, but when combined with at least one or more of the other intention analysis factors, the accuracy of the intention analysis can be further increased.

The above-mentioned scheduling information may be the user's scheduling information determined based on the aforementioned user information.

Next, the operation of the artificial intelligence device 10 based on the intention analysis result information considering the content information as the intention analysis factor is as follows.

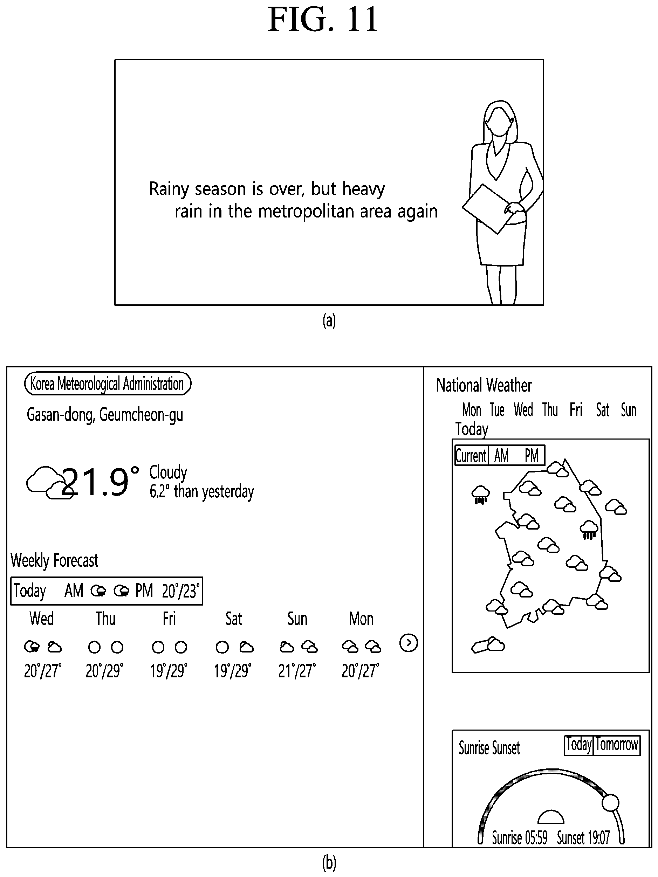

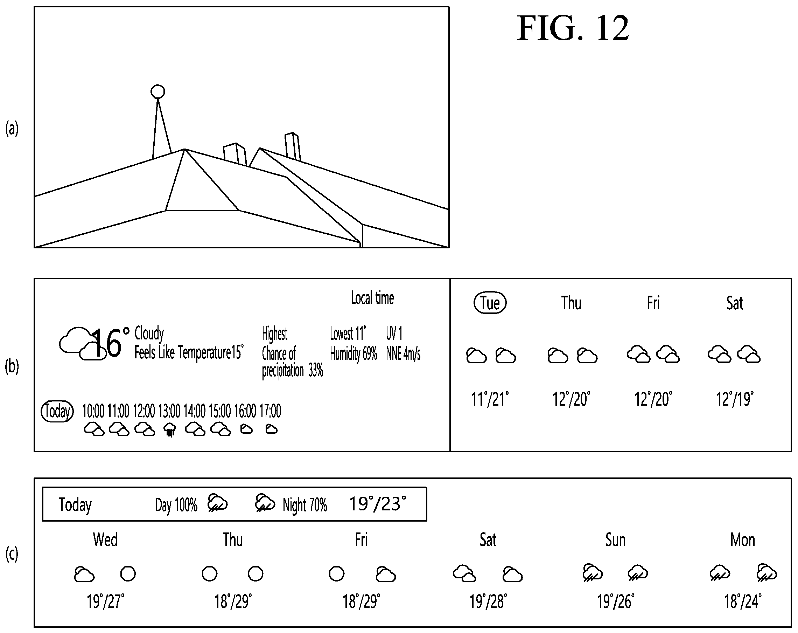

FIGS. 11 and 12 are diagrams illustrating the operation based on the intention analysis result information considering the content information in the artificial intelligence device 10 according to one embodiment of the present disclosure.

As one of the intention analysis factors, the content may indicate the type, attribute, genre, and other information of the content currently being played, scheduled to be played, or scheduled to be played in the artificial intelligence device 10.

As shown in FIG. 11(a), it is assumed that the artificial intelligence device 10 receives the user's input while providing the current news or weather app or information.

The artificial intelligence device 10 may transmit the user's input and at least one of the currently playing content information, the previously played content information, or the content information scheduled to be played together to the NLP server 30.

The NLP server 30 extracts related words or corpora from the text data for the transmitted user input and the content information transmitted by the artificial intelligence device 10, and if the relevance of the two is above a threshold, the content information transmitted by the artificial intelligence device 10 can be further referenced when analyzing the intent based on the text data for the user input.

Referring to FIG. 11(a), the artificial intelligence device 10 provides news. At this time, the news provides information on the weather. In this process, when the artificial intelligence device 10 receives a user input such as 'Show me the weather', it transmits it to the NLP server 30, but information on the news providing the weather information can also be provided as content information.

When analyzing the intent for the user input 'Show me the weather', the NLP server 30 can perform the intent analysis by referring to the fact that the news containing the weather information was being played on the artificial intelligence device 10 at the time of the user input.

Therefore, the NLP server 30 can provide weather information such as FIG. 11(b) including a region and specific weather information as the intent analysis result information and provide a corresponding action.

Referring to FIG. 11(a) and 11(b), the artificial intelligence device 10 or the NLP server 30 can provide detailed weather information (e.g., full version) of the region to which the current user belongs and/or the region related to the weather information mentioned in the news as the intent analysis result information.

On the other hand, unlike as shown in FIG. 11(a), when the artificial intelligence device 10 is providing a drama rather than news including weather information, if a user input of 'show me the weather' is received, a corresponding action can be performed differently from the above-described embodiment. The artificial intelligence device 10 transmits the content information to the NLP server 30 together with the user input, but if the correlation between the content information and the user input is below a threshold or irrelevant as a result of the judgment, the NLP server 30 can ignore or not refer to the intent analysis.

Similarly, as shown in FIG. 12(a), the AI device 10 is playing a travel program for a specific region, and at this time, let's say that a user input of 'show me the weather' is received.

The AI device 10 can provide information on the content currently being played along with the user input. The AI device 10 can transmit content information including additional information according to the content to the NLP server 30. For example, if FIG. 12(a) is basically a travel program and provides travel information for a specific region (e.g., Denmark) in the corresponding episode, the additional information can include information on the corresponding region. The artificial intelligence device 10 performs intention analysis by referring to the NLP server 30 when the correlation between the content information including additional information and the user input is greater than the threshold, and as the intention analysis result, it can provide weather information for the corresponding region as shown in FIG. 12(b) and/or weather information for Korea (the region to which the artificial intelligence device 10 belongs, etc.) as shown in FIG. 12(c).

Meanwhile, when providing weather information for the corresponding region as shown in FIG. 12(b) based on the intention analysis result considering the content information for the user input, if the user input is not specific (for example, tomorrow, this week, next week, etc.), not only the current and this week's weather information for the corresponding region, but also the climate of the corresponding region, weather information for one year, etc. may be provided together. This may be linked to the schedule information, and weather information for the schedule related to the schedule information may be provided.

Next, the operation of the artificial intelligence device 10 based on the intention analysis result information considering spatial information as an intention analysis factor is as follows.

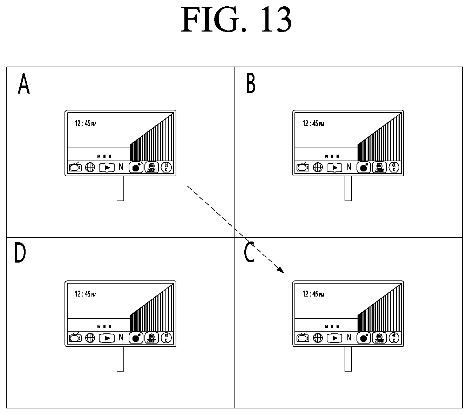

FIG. 13 is a drawing illustrating an operation based on information on the intention analysis result that considers space information in an artificial intelligence device 10 according to an embodiment of the present disclosure.

As one of the aforementioned intention analysis factors, a space may represent a space pre-registered in at least one of the artificial intelligence device 10 and the voice service server 200. Such a space may be defined and registered in various ways, such as a living room (e.g., space A in FIG. 13), a kitchen (e.g., space B in FIG. 13), a bedroom (e.g., space C in FIG. 13), a child's study room (e.g., space D in FIG. 13), etc. At this time, the space does not necessarily have to be one physical space. For example, if the living room can be identified by dividing it into living room 1, living room 2, etc., it may be defined as a separate space.

Meanwhile, as the intention analysis factor, at least the artificial intelligence device 10 must be able to detect or identify entry and exit into the corresponding space. In this disclosure, known technologies related to spatial recognition, detection, or identification are referenced, and separate descriptions thereof are omitted.

Spatial information may indicate identification information for a space to which an AI device 10 of a movable form belongs or enters or exits, as shown in FIG. 6.

The AI device 10 may have map information for a space, and may identify each space by assigning an identifier. Meanwhile, each space may have different usage patterns, etc. depending on the characteristics of the space, and this may be referred to in intention analysis, contributing to more accurate intention analysis for user input.

Referring to FIG. 13, the AI device 10 may belong to one of spaces A to D, or may enter another space.

In relation to this disclosure, it is assumed that the same user input (e.g., 'How's the weather?') is received when the AI device 10 is located in space A (living room) and when it is located in space C (bedroom).

In this case, the NLP server 30 can perform an intent analysis on the user input by utilizing the space identification information when the AI device 10 belongs to space A and when it belongs to space C.

For example, when the AI device 10 belongs to space A, the NLP server 30 can determine that the user input ('How's the weather') in the living room wants to see the current weather information of the corresponding space identification information.

On the other hand, when the AI device 10 belongs to space C, the NLP server 30 can determine that the user input ('How's the weather') in the bedroom wants to see the weather information of the area where the workplace is located tomorrow rather than the current weather of the corresponding area.

In this way, the NLP server 30 can perform an intent analysis on the user input by referring to the space identification information of the AI device 10 to derive more accurate intent analysis result information.

The NLP server 30 may further refer to at least one of the various intention analysis factors described above (e.g., time information) to derive analysis result information that is more in line with the user's intention.

The above-described embodiments can be viewed as embodiments that provide information (recommendation information) as one of the corresponding actions based on the intention analysis result information received through the NLP server 30 in response to the user input in the artificial intelligence device 10 according to the present disclosure.

Hereinafter, an embodiment of performing a function (recommendation function) or outputting information related to a function (recommendation function) as one of the corresponding actions based on the intent analysis result information received from the NLP server 30 in the artificial intelligence device 10 is described.

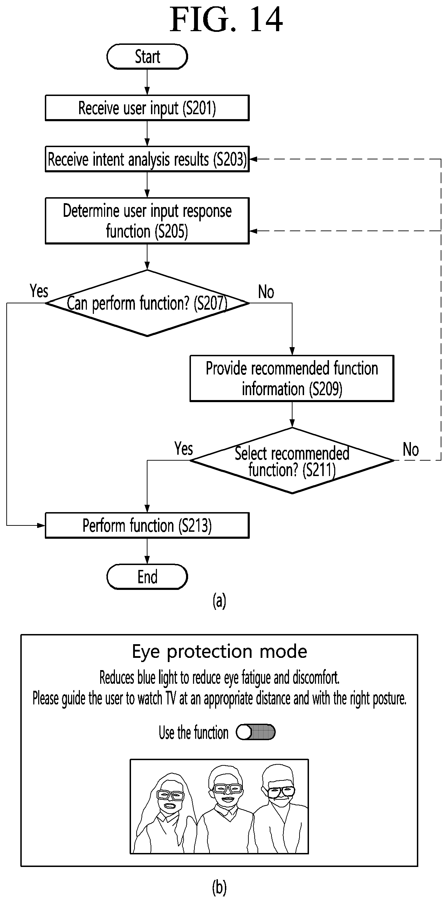

FIG. 14 is a diagram illustrating a method for processing user input of an artificial intelligence device 10 according to one embodiment of the present disclosure.

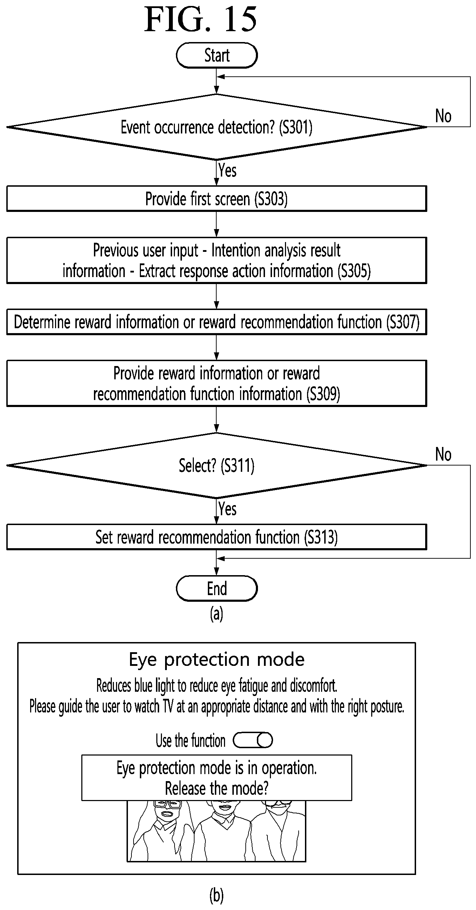

FIG. 15 is a diagram illustrating a method for processing user input of an artificial intelligence device 10 according to another embodiment of the present disclosure.

FIGS. 14 and 15 are described from the perspective of the artificial intelligence device 10, but are not limited thereto.

In order for the artificial intelligence device 10 to perform a function or provide recommendation information about a function, the user input may not necessarily be a direct request for executing the corresponding function.

First, referring to FIG. 14(a), when a user input is received (S201), the AI device 10 transmits it to the NLP server 30 and can receive the intent analysis result information for the received user input from the NLP server 30 (S203).

The specific details of steps S201 to S203 refer to the contents described above in the present disclosure, and redundant descriptions are omitted here.

When the AI device 10 receives the intent analysis result information from the NLP server 30 through step S203, the AI device 10 can determine a function corresponding to the user input based on the intent analysis result information (S205).

The AI device 10 can determine whether the function determined through step S205 is currently executable (S207).

If the AI device 10 determines that the function determined through step S207 is currently executable, the AI device 10 can perform and apply the function (S213).

On the other hand, if the AI device 10 determines that the function determined through step S207 is not currently executable, it can configure and provide recommended function information (S209).

The AI device 10 can determine whether the recommended function provided through step S209 has been selected (S211).

If the recommended function is selected as a result of the determination through step S211, the AI device 10 can perform the corresponding function (S213).

If the recommended function is not selected as a result of the determination through step S211, the AI device 10 can transmit feedback data including the user's previous input to the NLP server 30 to further consider the feedback data and request the intent analysis result for the user input again, or perform the user input response function determination process based on the feedback data in step S205 and perform the subsequent procedures again.

In step S201 of FIG. 14(a), if the user input received is, for example, 'Dim the screen' or 'Turn off the AI device 10 after 30 minutes', then in step S205, for example, the eye protection function is determined and guide information (for example, 'Shall I set the eye protection function?) may also be provided.

According to another embodiment, in step S201 of FIG. 14(a), if the user input received is, for example, 'Dim the screen' or 'Turn off the AI device 10 after 30 minutes', then in step S205, for example, the screen brightness function is determined and the screen may be provided in a darkened state. Separately, the AI device 10 may additionally determine the eye protection function (or vision protection mode) as a recommended function in relation to the screen brightness function and provide recommended guide information (for example, 'Shall I set the eye protection function?) regarding it.

FIG. 15 may represent a compensation function that can be automatically provided following or separately from FIG. 14. For convenience of explanation, FIG. 15 is described as an example after the first function (recommendation function) is set based on the user input and the result of the analysis of the intention thereof in FIG. 14.

The artificial intelligence device 10 may detect the occurrence of an event (S301). Here, the event may include at least one of user input reception, input reception of a remote control device such as a function request, power-on of the artificial intelligence device 10, power-on/off of a device linked to or surrounding the artificial intelligence device 10, etc. The user input does not necessarily have to be an input related to the aforementioned compensation function, and does not necessarily have to be limited to a specific form (e.g., voice).

The artificial intelligence device 10 may configure and provide a first screen (S303).

The first screen may be configured differently depending on the event detected in step S301. For example, if the event is a request to power on the AI device 10, the first screen may be the initial screen. On the other hand, if the AI device 10 is already powered on and the event is the power on/off of a device linked to or surrounding the AI device 10, the first screen may be an OSD message that can be provided on the current playback content screen or a separately configured user interface screen.

If the AI device 10 detects the occurrence of an event, it may extract the information on the result of the analysis of the user input-intention-response action (S305).

The AI device 10 may determine and provide reward information or a reward recommendation function based on the information extracted through step S305 (S307, S309).

The AI device 10 may determine whether the user selects the reward information or the reward recommendation function provided through step S309 (S311).

If the AI device 10 determines through step S311 that the reward information or reward recommendation function provided by the user is selected, the AI device 10 can set the corresponding function to the AI device 10 (S313).

In the present disclosure, the reward information or reward recommendation function may, for example, indicate a corresponding action that is in a reward relationship with the previous or previous user input-intention analysis result information-corresponding action, but is not necessarily limited thereto. For example, the reward information or reward recommendation function may be the same action as the corresponding action based on the intent analysis result information for the previous user input, or may be different in level or intensity, etc. The reward information or reward recommendation function may be a corresponding action to the content currently set to the AI device 10, and the timing of setting the currently set content may not be an issue.

FIG. 15 is not necessarily activated when a user input is directly received, and may be automatically or manually performed as an action corresponding to or following a previous or immediate user input. For example, when a response action (information or function) according to a previous user input is based on the current state of the current artificial intelligence device 10 or surrounding situation information, when the user may feel inconvenienced, or when it is based on the results of log data analysis or user history, etc., it may be automatically performed when such a user input is expected.

According to another embodiment, this automatic compensation action may be based on the average content (settings, requests, etc.) of various users registered on the voice service server rather than the individual user, which may be because it is an automatic compensation action rather than a compensation action provided based on the user's input. Meanwhile, in another embodiment, the opposite is also possible.

Let's say that the usage pattern of user A is a pattern of asking about the weather by voice, with the volume set to 30 in the morning, the channel set to ABC. At this time, if the user turns on the AI device 10 in the morning, based on the usage pattern described above, the user can perform actions such as 'Good morning' and 'Shall I switch to ABC channel?' and 'Would you like to see today's weather information?'.

On the other hand, let's say that the user B inputs 'Volume 15' and 'Turn on channel ABC' through a remote control device and 'How's the weather?' by voice input the previous evening, and the AI device 10 performs corresponding actions. If the user turns on the AI device 10 in the morning the next day, the AI device 10 can operate as one of the following. First, the AI device 10 can change the volume from 15 to volume 30, change from channel ABC to channel BCD, and provide weather information of the corresponding area and/or the expected area based on scheduling information for the same day as compensation information or compensation actions in relation to the results of the actions performed in the previous evening, for example, by changing the volume from 15 to volume 30, changing from channel ABC to channel BCD, and providing 'How's the weather?' by voice input as compensation information or compensation actions. Alternatively, the AI device 10 may perform compensation information or compensation operation corresponding only to voice input, excluding input (volume change and channel change) via a remote control device in the evening of the previous day.

In FIG. 15(b), in response to the eye protection mode operation setting performed in the evening of the previous day in FIG. 14(b), a guide message may be provided asking whether to release the eye protection mode in operation the next morning, as the eye protection mode is in operation.

The embodiments disclosed in Figs. 14 and 15 describe the contents of performing a function or performing a recommendation as a corresponding operation corresponding to the user input, but even in the case of providing information or recommended information as a corresponding operation as described above, it may be interpreted as providing a function related to information or recommended information provided based on the information, although it is not a function corresponding to the intent analysis result information according to the user input.

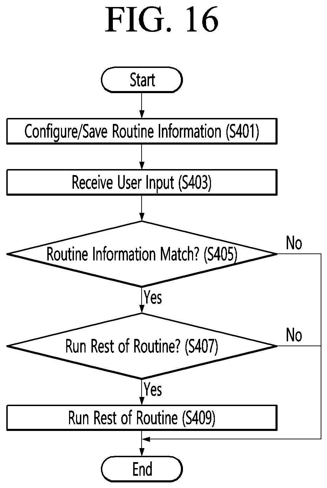

FIG. 16 is a drawing illustrating a user input processing method of the AI device 10 according to another embodiment of the present disclosure.

The artificial intelligence device 10 can configure and store routine information based on user-time-space, etc., and provide a service by applying the routine according to the preset. However, if the user input corresponds to or is arranged in one of these routine pieces of information, a definition of the processing operation may be required.

Referring to FIG. 16, the artificial intelligence device 10 can configure and store routine information (S401).

After S401, the artificial intelligence device 10 can receive user input (S403).

The artificial intelligence device 10 can determine whether the user input received in step S403 matches (or is related to) at least one of the routine pieces of information stored in step S401 (S405).

The AI device 10 can determine whether to execute the routine based on the remaining routine information stored in step S401 if the user input of step S403 matches at least one of the routine information stored in step S401 as a result of the determination in step S405 (S407).

The AI device 10 can execute the routine based on the remaining routine information stored in step S407 (S409).

The AI device 10 can determine whether to execute the routine based on the remaining routine information stored in step S407 manually or automatically. In the former case, a guide for whether to execute the routine can be provided and the determination can be made based on the user's input. In the latter case, whether to execute the routine can be determined by referring to at least one of the intention analysis factors. For example, the AI device 10 can automatically determine whether to execute the routine based on the user information-time information-space information if the routine matches the execution content or pattern set for the routine or the relevance is above a threshold value.

In step S409, the AI device 10 can execute only the routine information scheduled to be sequentially executed in the subsequent order if the user input matches (or is related to) at least one of the routine information that must be sequentially executed in the set order.

According to another embodiment, the AI device 10 reads out routine information corresponding to the user input, and if the user input matches (or is related to) at least one routine in the read out routine information, it can execute all routines included in the read out routine information, even if the user input is related to a specific routine.

According to another embodiment, the AI device 10 reads out routine information corresponding to the user input, and if there are multiple routines to be read out, it can manually or automatically select one of the routine information and process it as described above. In the former case, the AI device 10 can provide a guide message through the screen so that the user can select specific routine information, and can perform the procedure after step S407 with the specific routine information selected according to the user input. In the latter case, the artificial intelligence device 10 may further refer to at least one of the intention analysis factors and the execution schedule information of the original corresponding routines, select the most relevant, that is, optimal, specific routine information, and perform the procedure after step S407 based on the selected routine information. In this case, the unselected routine information may or may not be briefly provided through the screen.

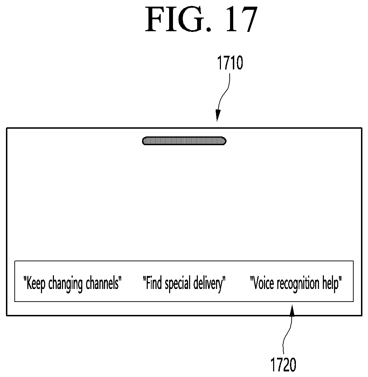

FIG. 17 is a diagram illustrating a recommendation query 1720 through a speech agent 1710 according to an embodiment of the present disclosure.

The artificial intelligence device 10 according to the present disclosure may provide the speech agent 1710 on one area of the display 150 or 151.

As illustrated in FIG. 17, the artificial intelligence device 10 may provide the recommendation query 1720 together when providing the speech agent 1710. The recommended query 1720 may be for the convenience of the user using the speech agent 1710. The speech agent 1710 may be provided by a remote trigger word or upon occurrence of an arbitrary event, but is not limited thereto.

The recommended query 1720 may be provided with at least one or more query information arbitrarily determined at the time the speech agent 1710 is provided.

According to an embodiment, the artificial intelligence device 10 according to the present disclosure may determine and provide a recommended query by referring to at least one or more of the intention analysis factors when providing the speech agent 1710.

The recommended query included in the speech agent 1710 may or may not change each time the speech agent 1710 is provided. The recommendation query may be determined by comparing the reason for providing the speech agent 1710 with at least one of the intention analysis factors at the time the speech agent 1710 is provided, and determining the recommendation query based on the result of the comparison determination. Alternatively, the recommendation query may be determined based on at least one of the user, time, and space. That is, the artificial intelligence device 10 may create at least one recommendation query 1720 based on the recommendation keyword configured based on at least one of the intention analysis factors.

According to an embodiment, the query information may include at least one of the following: previous or previous speech information, information related to a reward function, recommended speech information based on a previous or previous speech, help information for using a voice recognition function, speech information related to the current content, and other utterance information arbitrarily determined in consideration of the various intention analysis factors described above in the present disclosure.

Table 4 illustrates, as an example, a recommended query (or recommended keyword) based on time information, which is one of the intention analysis factors. Table 4 may exist in a form stored or embedded in an artificial intelligence device 10, or may be stored in an NLP server 30. Meanwhile, the recommended query (recommended keyword) of Table 4 may be continuously updated. The update may be updated in a user-customized manner or may be updated based on the usage information of all artificial intelligence devices or users registered in the voice service server 200. However, the present disclosure is not limited to the contents disclosed in Table 4.

**[Table 4]**

| Recommended Queries (Recommended Keywords) | Current Time Zone | | | |
|---|---|---|---|---|
| | Dawn (24:00~04: 59) | AM (05:00~11: 59) | PM (12:00~17: 59) | Evening (18:00~23: 59) |
| What's the weather like today? | O | O | | |
| Tell me the weather for tomorrow | | | O | O |
| What's the weather like this weekend? | O | | O | O |
| Find me some aerobic exercise | | O | | O |
| Turn on hearing protection mode | O | | | O |
| Turn on eye protection mode | O | | | O |
| Sleep reservation (Turn off the TV in 30 minutes) | O | | | O |
| What time is it now? | O | O | O | O |
| Set an alarm for 10 minutes/Set an alarm for 7 o'clock | | O | O | |
| Turn off the TV at 12 o'clock | | | | O |
| Show me a list of external inputs | | O | O | O |
| Turn on the channel I was watching at this time yesterday | | O | O | O |
| Dim the screen | O | | | |
| Brighten the screen | | O | | |
| Turn on the air conditioner | | O | O | O |
| Is the dishwasher done? | | O | O | O |
| Connect Bluetooth speaker | | O | O | O |
| LG Fitness | | O | O | O |
| Is there | O | O | O | O |
| anything worth watching? (Magic Link) | | | | |
| Magic Explorer | O | O | O | O |
| What's this music? | O | O | O | O |
| Screen settings | O | O | O | O |
| Sports alarm | O | O | O | O |
| Channel lock | O | O | O | O |
| Game home | O | O | O | O |
| Show multi-action | O | O | O | O |
| Sound settings | O | O | O | O |
| What have I been watching lately? | O | O | O | O |
| Who is {character name}? | O | O | O | O |
| Turn off the screen | O | O | O | O |

According to at least one of the various embodiments of the present disclosure, at least one of the operations performed by the artificial intelligence device 10 may be performed by the NLP server 30, and vice versa.

Even if not specifically mentioned, the order of at least some of the operations disclosed in the present disclosure may be performed simultaneously, performed in a different order than the order described above, or some may be omitted/added.

According to one embodiment of the present invention, the above-described method can be implemented as a code that can be read by a processor on a medium in which a program is recorded. Examples of the medium that can be read by a processor include a ROM, a RAM, a CD-ROM, a magnetic tape, a floppy disk, an optical data storage device, etc.

The display device described above is not limited to the configuration and method of the embodiments described above, and the embodiments may be configured by selectively combining all or some of the embodiments so that various modifications can be made.

### [Industrial Applicability]

According to the display device according to the present disclosure, the quality of voice recognition service can be improved and user satisfaction with the device can be maximized by deriving optimal intention analysis results that match various user inputs and providing corresponding information or performing functions, so that the display device has industrial applicability.

## Claims

1. An artificial intelligence device comprising:
a display; and
a processor configured to control the display,
wherein the processor is configured to receive a user input, transmit the user input to a server, receive response information including intent analysis result information for the user input from the server, and perform at least one operation among outputting information and executing a function according to the response information,
wherein the intent analysis result information includes an intent result analysis for the user input that has been first processed based on at least one intent analysis factor transmitted to the server.

2. The artificial intelligence device of claim 1, wherein the processor is configured to receive user feedback data according to the at least one operation performed, update the one or more intent analysis factors based on the feedback data, and transmit the updated intent analysis factors to the server,

3. The artificial intelligence device of claim 2, further comprising:
a memory configured to communicate with the processor and store data, and
wherein the processor is configured to parse the response information and to read, from the memory, information to be output and information related to executing the function based on the parsed response information.

4. The artificial intelligence device of claim 3, wherein when outputting information according to the intent analysis result information in the response information, the processor is configured to provide information configured as a first version or a second version based on the one or more intent analysis factors transmitted to the server.

5. The artificial intelligence device of claim 4, wherein when executing the function according to the intent analysis result information in the response information, the processor is configured to determine whether the function is capable of being executed, and when the determination result indicates that the function is not capable of being executed, provide recommended function information and execute the recommended function instead.

6. The artificial intelligence device of claim 1, wherein when an event occurrence is detected, the processor is configured to extract a previous user input, the intent analysis result information, and function execution operation information, and output information on at least one of information on the recommended reward function, and execute the recommended reward function.

7. The artificial intelligence device of claim 1, wherein the processor is configured to configure and store routine information on function execution in a memory, and, when the received intent analysis result information is related to at least one of the routines defined in the stored routine information, automatically execute the remaining routines included in the routine information.

8. The artificial intelligence device of claim 1, wherein the processor is configured to provide an utterance agent including at least one recommended query, and
wherein the at least one recommended query is written based on a recommended keyword configured based on at least one of intent analysis factors.

9. A method of operating an artificial intelligence device, comprising:
receiving a user input;
transmitting the user input to a server;
receiving response information including intent analysis result information for the user input from the server; and
performing at least one operation among outputting information and executing a function according to the response information,
wherein the intent analysis result information includes an intent analysis result for the user input that has been primarily processed based on at least one intent analysis factor transmitted to the server.

10. The method of claim 9, further comprising:
receiving user feedback data according to the at least one operation performed;
updating the one or more intent analysis factors based on the feedback data; and
transmitting the updated intent analysis factors to the server.

11. The method of claim 10, further comprising:
when outputting information according to intent analysis result information in the response information, information configured as a first version or a second version is provided based on one or more analysis factors transmitted to the server.

12. The method of claim 11, when executing a function according to the intent analysis result information in the response information, whether the function is capable of being executed is determined, and when the determination result indicates that the function is not capable of being executed, recommended function information is provided, and the recommended function is performed instead.

13. The method of claim 9, further comprising:
detecting an event occurrence;
extracting information on a previous user input, intent analysis result information, and function execution operation information;
outputting information about at least one of recommended reward function information; and
executing a recommended reward function.

14. The method of claim 9, further comprising:
storing routine information on function performance; and
when the received intent analysis result information is related to at least one of the routines defined in the stored routine information, automatically executing the remaining routines included in the routine information.

15. The method of claim 9, further comprising:
providing an utter agent including at least one recommendation query, and
wherein the at least one recommendation query is written based on a recommendation keyword configured based on at least one of the intent analysis factors.
